(19) Europäisches Patentamt
European Patent Office
Office européen des brevets

(11) **EP 3 206 036 B1**

(12) **EUROPÄISCHE PATENTSCHRIFT**

(45) Veröffentlichungstag und Bekanntmachung des Hinweises auf die Patenterteilung:
**19.08.2020  Patentblatt 2020/34**

(51) Int Cl.:
**G01N 35/10** (2006.01)      **B01L 3/02** (2006.01)

(21) Anmeldenummer: **16154992.8**

(22) Anmeldetag: **10.02.2016**

(54) **VERFAHREN ZUM BETRIEB EINES AUTOMATISCHEN ANALYSEGERÄTS UND AUTOMATISCHES ANALYSEGERÄT**

METHOD FOR OPERATING AN AUTOMATIC ANALYZER AND AUTOMATIC ANALYZER

PROCÉDÉ DE FONCTIONNEMENT D'UN APPAREIL D'ANALYSE AUTOMATIQUE ET APPAREIL D'ANALYSE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.08.2017  Patentblatt 2017/33**

(73) Patentinhaber: **Siemens Healthcare Diagnostics Products GmbH**
**35041 Marburg (DE)**

(72) Erfinder:
• **Klingelhoefer, Reiner**
  **35094 Lahntal (DE)**
• **Michels, Thorsten**
  **64521 Gross-Gerau (DE)**
• **Pufahl, Holger**
  **65835 Liederbach (DE)**
• **Solbach, David**
  **60316 Frankfurt (DE)**

(56) Entgegenhaltungen:
WO-A1-2015/126839      FR-A1- 2 867 397
US-A1- 2007 026 534      US-A1- 2012 196 374
US-A1- 2014 193 918

• WEIBEL R ET AL: "Development of Standard Test Procedures for Quantifying Carry Over from Fixed Pipetting Tips in Liquid-Handling Systems", JOURNAL OF THE ASSOCIATION FOR LABORATORY AUTOMATION, ELSEVIER, Bd. 15, Nr. 5, 1. Oktober 2010 (2010-10-01), Seiten 369-378, XP027391801, ISSN: 1535-5535 [gefunden am 2010-03-04]

## Beschreibung

Die Erfindung liegt auf dem Gebiet der automatischen in vitro-Diagnostiksysteme. Gegenstand der Erfindung ist ein Verfahren zum Transfer von Probenflüssigkeiten in einem automatischen Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, füllen die benötigten Reagenzien mittels einer Pipettiervorrichtung mit einer Pipettiernadel in eine Messküvette ein. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette z.B. zur Entsorgung durch einen Abfallschacht in einen Abfallbehälter verbracht.

In einem automatischen Analysator wird zur Abarbeitung einer Analyse einer Probe eine Vielzahl von verschiedenen Gerätebaugruppen zum Prozessieren der Probe benötigt. Beispielsweise wird ein Teil der Probenflüssigkeit einer in einem Primärgefäß eingehenden Probe in ein Aliquotgefäß mit Hilfe einer Pipettiervorrichtung transferiert. Dieser Vorgang wird auch als Aliquotierung, also Entnahme einer Teilmenge bezeichnet. Das Primärgefäß kann den Analysator umgehend wieder verlassen und die übrige Probenflüssigkeit kann zu weiteren Analysatoren weitergeleitet werden. Dort können dann weitere Analysen der Probe zeitlich parallel veranlasst und ausgeführt werden. Für die Analyse der Probe werden dann Teile oder die gesamte Probenflüssigkeit aus dem Aliquotgefäß entnommen und auf dem Analysator weiter prozessiert.

WO 2015/126839 A1 beschreibt einen Analysator der mit oder ohne Aliquotierung Proben analysieren kann. FR 2 867 397 A1 beschreibt Korrekturen von Volumina in Pipetten. US 2007/026534 A1 beschreibt Korrekturen eines aufgrund von Volumenabweichungen veränderten Ergebnisses einer Analyse in einem Analysator. US2014/193918 A1 beschreibt eine Korrektur eines pipettierten Volumens in einem Analysator. US 2012/196374 A1 beschreibt eine Ermittlung eines Zusammenhangs zwischen nominell und tatsächlich pipettierten Volumina in einem Analyzer. Aus dem oben genannten Stand der Technik sind die nicht kennzeichnenden Merkmale der Ansprüche 1 und 12 bis auf, dass die Pipettiervorrichtung eine Systemflüssigkeit aufweist, bekannt. Weibel et al., "Development of_Standard Test Procedures for Quantifying Carry Over from Fixed Pipetting Tips in Liquid-Handling Systems", Journal of the Association for Laboratory Automation, Elsevier, Bd. 15, Nr. 5 beschreibt eine Pipettiervorrichtung mit einer Systemflüssigkeit.

Die Aliquotierung bietet verschiedene Vorteile, einschließlich der Möglichkeit einer gleichbleibend hohen Geschwindigkeit der Probeneingabe in einen Analysator unabhängig davon, welche Analysen auf dem Analysator durchgeführt werden sollen und/oder der Anzahl der für eine Probe vorgesehenen Analysen auf dem Analysator.

Jedoch ist nicht für alle Proben eine Aliquotierung möglich. Insbesondere steht z.B. bei pädiatrischen Proben häufig nur so wenig Probenflüssigkeit zur Verfügung, dass eine Aliquotierung nicht möglich ist. Ebenfalls kann keine Aliquotierung bei bestimmten Kontrollmessungen durchgeführt werden, bei denen bestimmte probenähnliche Kontrollmaterialien analysiert werden. In diesen Fällen entfallen die Aliquotierung und die Pipettierung in das Aliquotgefäß.

Aufgrund der Systemflüssigkeit, die sich in der Pipettiernadel der Pipettiervorrichtung des Analysators befindet, kommt es bei jeder Pipettierung von Probenflüssigkeit zu einer Vermischung der Probenflüssigkeit mit Systemflüssigkeit und somit zu einer Verdünnung der Probenflüssigkeit mit Systemflüssigkeit. Dies führt dazu, dass in einem gegebenen Volumen Probenflüssigkeit sich nach einem Pipettiervorgang etwas weniger Probenmaterial befindet als im gleichen gegebenen Volumen Probenflüssigkeit vor dem Pipettiervorgang. Dies kann dazu führen, dass Ergebnisse von Analysen, die mit Aliquotierung bzw. ohne Aliquotierung durchgeführt wurden, voneinander abweichen können und nicht miteinander vergleichbar sind, da die in einem gegebenen Probenvolumen enthaltenen Mengen eines Analyten voneinander abweichen können. Dies ist nicht wünschenswert und kann beispielweise bei Therapieentscheidungen in der Neonatologie hoch relevant und sehr problematisch sein.

Es ist daher Aufgabe der Erfindung, ein Verfahren zum Prozessieren einer Probe in einem automatischen Analysegerät sowie ein entsprechendes Analysegerät zur Verfügung zu stellen, welches einen Vergleich von Analyseergebnissen von Analysen ermöglicht, unabhängig davon, ob die Analysen mit Aliquotierung und ohne Aliquotierung durchgeführt wurden.

**Diese Aufgabe wird erfindungsgemäß durch die im Folgenden beschriebenen Gegenstände und Verfahren gelöst.**

Die Erfindung geht von dem Gedanken aus, dass ein Vergleich von Analyseergebnissen ermöglicht wird, unabhängig davon, ob die Analysen mit Aliquotierung und ohne Aliquotierung durchgeführt wurden, indem die Verdünnungseffekte, die aufgrund des zusätzlichen Pipettiervorgangs bei Analysen mit Aliquotierung zustande kommen, bei Analysen ohne Aliquotierung durch eine Anpassung des pipettierten Volumens aus dem Primärgefäß erreicht werden kann.

Es wurde gefunden, dass eine verbesserte Vergleichbarkeit von Analyseeregebnissen in einem automatischen Analysegerät erreicht werden kann, indem bei Analysen ohne Aliquotierung das pipettierte Volumen aus dem Primärgefäß in Abhängigkeit eines volumenabhängigen und eines volumenunabhängigen Korrekturfaktors verringert wird. Dies hat den Vorteil, dass eine besonders genaue Korrektur der Verdünnungseffekte erfolgen kann und Ergebnisse von Analysen, die mit Aliquotierung bzw. ohne Aliquotierung durchgeführt wurden sehr detailliert vergleichbar sind.

Gegenstand der vorliegenden Erfindung ist ein Verfahren zum Transfer einer ersten Probenflüssigkeit aus einem ersten Primärgefäß in ein erstes Zielgefäß und einer zweiten Probenflüssigkeit aus einem zweiten Primärgefäß in ein zweites Zielgefäß mit Hilfe mindestens einer automatischen Pipettiervorrichtung mit einer Systemflüssigkeit in einem automatischen Analysegerät mit einem Steuergerät, das Verfahren umfassend die Verfahrensschritte

a) Aufnahme eines ersten Flüssigkeitsvolumens V1 der ersten Probenflüssigkeit mit Hilfe der Pipettiervorrichtung aus dem ersten Primärgefäß,

b) Abgabe des ersten Flüssigkeitsvolumens V1 der ersten Probenflüssigkeit mit Hilfe der Pipettiervorrichtung in ein Aliquotgefäß,

c) Aufnahme eines zweiten Flüssigkeitsvolumens V2 der ersten Probenflüssigkeit mit Hilfe der Pipettiervorrichtung aus dem Aliquotgefäß,

d) Abgabe des zweiten Flüssigkeitsvolumens V2 der ersten Probenflüssigkeit mit Hilfe der Pipettiervorrichtung in das erste Zielgefäß,

e) Aufnahme eines dritten Flüssigkeitsvolumens V3 der zweiten Probenflüssigkeit mit Hilfe der Pipettiervorrichtung aus dem zweiten Primärgefäß,

f) Abgabe des dritten Flüssigkeitsvolumens V3 der zweiten Probenflüssigkeit mit Hilfe der Pipettiervorrichtung in das zweite Zielgefäß,

wobei das dritte Flüssigkeitsvolumen V3 der zweiten Probenflüssigkeit automatisch mit Hilfe des Steuergeräts gemäß des folgenden Zusammenhangs ermittelt wird:

$$V3 = a\ V2 + b,$$

wobei V2 das zweite Flüssigkeitsvolumen der ersten Probenflüssigkeit, a einen vorgegebenen flüssigkeitsvolumenabhängigen Korrekturfaktor und b einen vorgegebenen flüssigkeitsvolumenunabhängigen Korrekturfaktor bezeichnet und wobei der Korrekturfaktor a ungleich Eins ist.

Dies hat den Vorteil, dass die unterschiedlichen Abarbeitungswege mit Aliquotierung und ohne Aliquotierung vergleichbare Ergebnisse liefern und ein Vergleich von Analysen unabhängig von deren jeweiligem Abarbeitungsweg ermöglicht wird. Beispielsweise kann durch das erfindungsgemäße Verfahren genau die Menge eines Analyten, die bei einem zusätzlichen Pipettiervorgang bei einer Aliquotierung in der Pipettiervorrichtung verbleibt und nicht im ersten Zielgefäß ankommt, berücksichtigt und bei einem Abarbeitungsweg ohne Aliquotierung entsprechend berücksichtigt und korrigiert werden.

Die Korrekturfaktoren a und b können beispielsweise in vergleichenden Messreihen mit verschiedenen Abarbeitungswegen ermittelt und Effekte eines verringerten oder vermehrten Menge des Analyten auf die Messergebnisse bestimmt werden. Da die auftretenden Effekte nicht notwendigerweise linear von der Menge oder Mengendifferenz des Analyten abhängen, kann es notwendig sein, Messreihen über den gesamten Bereich, in dem mögliche Ergebnisse liegen können, durchzuführen.

Der Korrekturfaktor a korrigiert eine Vermischung von Probenflüssigkeit und Systemflüssigkeit bei einem Pipettiervorgang. Dies findet beispielsweise im Innern einer Pipettiernadel der Pipettiervorrichtung statt und kann beispielsweise von dem pipettierten Volumen der Probenflüssigkeit und der verwendeten Systemflüssigkeit abhängen.

Der Korrekturfaktor b korrigiert eine Verschleppung von Probenflüssigkeit auf der Außenseite der Pipettiernadel. Diese ist unabhängig von dem pipettierten Volumen der Probenflüssigkeit, kann jedoch z.B. von der Eintauchtiefe der Pipettiernadel in die Probenflüssigkeit und dem Material der Pipettiernadel abhängen.

Weiter können die Korrekturfaktoren a und b beispielsweise von der Temperatur der Probenflüssigkeit, der Pipettiernadel und/oder der Systemflüssigkeit abhängen.

Bevorzugt umfasst die Pipettiervorrichtung mindestens eine Pipettiernadel.

In einer bevorzugten Ausführung des Verfahrens sind die Korrekturfaktoren a und b so vorgegeben, dass das dritte Flüssigkeitsvolumen V3 der zweiten Probenflüssigkeit kleiner als das zweite Flüssigkeitsvolumen V2 der ersten Probenflüssigkeit ist.

In weiterer bevorzugter Ausführung des Verfahrens ist der Korrekturfaktor a kleiner als Eins und größer als Null.

In weiterer bevorzugter Ausführung des Verfahrens ist der Korrekturfaktor b ungleich Null.

In weiterer bevorzugter Ausführung des Verfahrens ist der Korrekturfaktor b kleiner als Null.

In weiterer bevorzugter Ausführung des Verfahrens entspricht der Korrekturfaktor b einem an der Außenseite einer Pipettiernadel der Pipettiervorrichtung anhaftenden Volumen der ersten Probenflüssigkeit.

In weiterer bevorzugter Ausführung des Verfahrens wird der Korrekturfaktor a und/oder der Korrekturfaktor b experimentell für die Pipettiervorrichtung bestimmt. Bevorzugt erfolgt die experimentelle Bestimmung mit einem automatischen Analyzer. Dies hat den Vorteil, dass die Korrektur präzise für die jeweilige Pipettiervorrichtung ermittelt werden kann.

In weiterer bevorzugter Ausführung des Verfahrens wird der Korrekturfaktor a und/oder der Korrekturfaktor b durch vergleichende Messreihen mit einer unterschiedlichen Anzahl von Aufnahmen und Abgaben der ersten und der zweiten Flüssigkeit mit Hilfe der Pipettiervorrichtung bestimmt. Dies hat den Vorteil, dass die Korrektur spezifisch für die in dem jeweiligen Analyzer auftretenden Abarbeitungswegen mit unterschiedlichen Anzahlen von Pipettiervorgängen ermittelt werden kann.

In weiterer bevorzugter Ausführung des Verfahrens ist die Systemflüssigkeit Wasser. Dies hat den Vorteil, dass die Systemflüssigkeit toxikologisch weitgehend unbedenklich ist und diesbezüglich eine Gefährdung von Personen, die den Analyzer bedienen, ausgeschlossen werden kann. Weiter ist Wasser vergleichsweise leicht in hoher Reinheit verfügbar.

In weiterer bevorzugter Ausführung des Verfahrens enthalten die erste und/oder die zweite Probenflüssigkeit eine Probe eines Patienten, einen Kalibrator, ein Kontrollmaterial und/oder eine Kontrolllösung.

In weiterer bevorzugter Ausführung des Verfahrens enthält die erste und/oder die zweite Probenflüssigkeit eine Körperflüssigkeit, bevorzugt Blut oder Urin.

Ein weiterer Gegenstand der Erfindung ist ein automatisches Analysegerät umfassend mindestens eine automatische Pipettiervorrichtung mit einer Systemflüssigkeit zum Transferieren von Flüssigkeitsvolumina und mindestens ein Steuergerät, wobei das Steuergerät so konfiguriert ist, dass es die Durchführung eines Verfahrens zum Transfer einer ersten Probenflüssigkeit aus einem ersten Primärgefäß in ein erstes Zielgefäß und einer zweiten Probenflüssigkeit aus einem zweiten Primärgefäß in ein zweites Zielgefäß nach einem der erfindungsgemäßen Verfahren steuern kann.

In bevorzugter Ausführung des automatischen Analysegeräts ist die automatische Pipettiervorrichtung an einem robotisch verfahrbaren oder robotisch schwenkbaren Transferarm befestigt. Dies hat den Vorteil, dass Pipettiervorgänge an verschiedenen Positionen innerhalb des Analyzers von der automatischen Pipettiervorrichtung automatisch durchgeführt werden können.

In weiterer bevorzugter Ausführung des automatischen Analysegeräts umfasst dieses eine Vielzahl von Aufnahmepositionen für jeweils ein Primär-, Aliquot-, und/oder Zielgefäß, und/oder eine Vielzahl von automatischen Pipettiervorrichtungen mit robotisch verfahrbaren und/oder robotisch schwenkbaren Transferarmen. Dies hat den Vorteil, dass eine Vielzahl von Proben und Analysen zeitgleich auf dem Analyzer abgearbeitet werden können und die Durchlaufzeit für Analysen verringert und damit der Probendurchsatz erhöht werden kann.

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

In weiterer bevorzugter Ausführungsform befindet sich die Probe in einer nicht ortsfesten Küvette, und mindestens eine, bevorzugt mindestens zwei Gerätebaugruppen sind als Aufnahmepositionen für die Küvette ausgestaltet. Dies hat den Vorteil, dass eine Vielzahl von Proben und Analysen besonders flexibel abgearbeitet werden können.

Unter einer "Probe" ist im Sinne der Erfindung das Material zu verstehen, dass die nachzuweisende Substanz (den Analyten) vermutlich enthält. Der Begriff "Probenflüssigkeit" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Das erste und/oder zweite Zielgefäß ist beispielsweise jeweils eine Messzelle, bevorzugt jeweils eine Messküvette.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann. Die Begriffe "Messküvette" und "Küvette" werden synonym verwendet.

Das erste und/oder zweite Primärgefäß ist beispielsweise jeweils ein Blutentnahmeröhrchen.

Das Aliquotgefäß ist beispielsweise ein Gefäß aus Glas, Kunststoff oder Metall. Bevorzugt handelt es sich bei dem Aliquotgefäß beispielsweise um eine Messzelle oder Messküvette.

**Die Erfindung wird anhand von Zeichnungen exemplarisch näher erläutert. Darin zeigen:**

FIG 1 eine schematische Darstellung der Pipettiervorgänge (11, 12) mit Aliquotierung zwischen einem ersten Primärgefäß (1), einem Aliquotgefäß (2) und einem ersten Zielgefäß (3),

FIG 2 eine schematische Darstellung des Pipettiervorgangs (13) ohne Aliquotierung zwischen einem zweiten Primärgefäß (4) und einem zweiten Zielgefäß (5).

**Gleiche Teile sind in allen Figuren mit denselben Bezugszeichen versehen.**

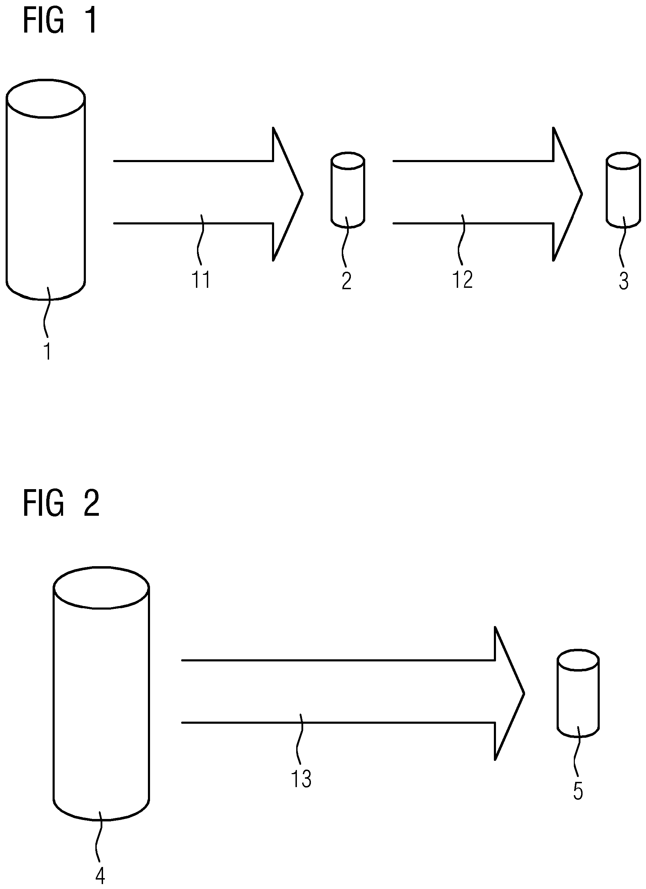

Die Gefäße (1, 2, 3, 4, 5) gemäß FIG 1 und FIG 2 befinden sich in einem nicht näher dargestellten automatischen Analysegerät, das zum Prozessieren einer Probe ausgelegt ist und das eine Steuereinheit mit einem Computersystem zur Steuerung des Prozessierens der Probe und eine Mehrzahl von Gerätebaugruppen zum Prozessieren der Probe umfasst, wie z.B. Pipettiervorrichtungen und Transporteinrichtungen.

FIG 1 zeigt schematisch eine Darstellung von Pipettiervorgängen (11, 12) mit Aliquotierung zwischen einem ersten Primärgefäß (1), einem Aliquotgefäß (2) und einem ersten Zielgefäß (3). Für den Pipettiervorgang (11) zwischen dem ersten Primärgefäß (1) und dem Aliquotgefäß (2) entnimmt die Pipettiervorrichtung ein erstes Flüssigkeitsvolumen V1 der ersten Probenflüssigkeit aus dem ersten Primärgefäß (1) und gibt das erste Flüssigkeitsvolumen V1 in das Aliquotgefäß (2) wieder ab. Das erste Flüssigkeitsvolumen V1 beträgt 300,0 Mikroliter (pL).

In der Pipettiervorrichtung findet eine unbeabsichtigte Vermischung und Verdünnung der ersten Probenflüssigkeit mit Systemflüssigkeit um etwa 3 Prozent (%) statt. Die Systemflüssigkeit ist Wasser. Die erste Probenflüssigkeit enthält ursprünglich im ersten Primärgefäß (1) in 300,0 $\mu$L Probenflüssigkeit 300,0 Einheiten eines Analyten. Nach dem Pipettiervorgang (11) enthalten 300,0 $\mu$L Probenflüssigkeit im Aliquotgefäß (2) aufgrund der Verdünnung nur noch 291,0 Einheiten des Analyten und 9,0 $\mu$L Systemflüssigkeit.

Für den Pipettiervorgang (12) zwischen dem Aliquotgefäß (2) und dem ersten Zielgefäß (3) entnimmt die Pipettiervorrichtung ein zweites Flüssigkeitsvolumen V2 der ersten Probenflüssigkeit aus dem Aliquotgefäß (2) und gibt das zweite Flüssigkeitsvolumen V2 in das erste Zielgefäß (3) wieder ab. Das zweite Flüssigkeitsvolumen V2 beträgt 50,0 $\mu$L.

In der Pipettiervorrichtung findet analog zum Pipettiervorgang (11) zwischen dem ersten Primärgefäß (1) und dem Aliquotgefäß (2) erneut eine unbeabsichtigte Vermischung und Verdünnung der ersten Probenflüssigkeit mit Systemflüssigkeit um etwa 3% statt. Die erste Probenflüssigkeit enthält ursprünglich im Aliquotgefäß (2) in 300,0 $\mu$L Probenflüssigkeit 291,0 Einheiten des Analyten und 9,0 $\mu$L Systemflüssigkeit. Nach dem Pipettiervorgang (12) enthalten 50,0 $\mu$L Probenflüssigkeit im ersten Zielgefäß (3) aufgrund der erneuten Verdünnung nur noch 47,0 Einheiten des Analyten und 3,0 $\mu$L Systemflüssigkeit.

FIG 2 zeigt schematisch eine Darstellung eines Pipettiervorgangs (13) ohne Aliquotierung zwischen einem zweiten Primärgefäß (4) und einem zweiten Zielgefäß (5). Für den Pipettiervorgang (13) entnimmt die Pipettiervorrichtung ein drittes Flüssigkeitsvolumen V3 einer zweiten Probenflüssigkeit aus dem zweiten Primärgefäß (4) und gibt das dritte Flüssigkeitsvolumen V3 in zweite Zielgefäß (5) wieder ab. Die erste und die zweite Probenflüssigkeit sind gleich, daher sollten Analysen der ersten und der zweiten Probenflüssigkeit vergleichbare Ergebnisse liefern. Das dritte Flüssigkeitsvolumen V3 beträgt 48,5 pL. Das dritte Flüssigkeitsvolumen V3 wird gemäß folgendem Zusammenhang bei gegebenem zweiten Flüssigkeitsvolumen V2 ermittelt:

$$V3 = a\ V2 + b$$

wobei a einen vorgegebenen flüssigkeitsvolumenabhängigen Korrekturfaktor und b einen vorgegebenen flüssigkeitsvolumenunabhängigen Korrekturfaktor bezeichnet.

Der Korrekturfaktor a ergibt sich aus dem Maß der Verdünnung der Probenflüssigkeiten bei dem Pipettiervorgang (11) vom ersten Primärgefäß (1) ins Aliquotgefäß (2). Diese Verdünnung beträgt 3%. Somit ergibt sich der Korrekturfaktor a mit dem Zusammenhang 100% - 3% = 97% zu a = 0.97.

Der Korrekturfaktor b beträgt Null.

Somit ergibt sich das dritte Volumen V3 = 48,5 pL bei einem zweiten Volumen V2 von 50 pL.

In der Pipettiervorrichtung findet beim Pipettiervorgang (13) eine unbeabsichtigte Vermischung und Verdünnung der zweiten Probenflüssigkeit mit Systemflüssigkeit um 3% statt. Die Systemflüssigkeit ist Wasser. Die zweite Probenflüssigkeit enthält ursprünglich im zweiten Primärgefäß (4) in 48,5 pL Probenflüssigkeit 48,5 Einheiten eines Analyten. Nach dem Pipettiervorgang (13) enthalten 48,5 pL Probenflüssigkeit im zweiten Zielgefäß (5) aufgrund der Verdünnung noch 47,0 Einheiten des Analyten und 1,5 pL Systemflüssigkeit.

Somit enthalten die Probenflüssigkeiten im ersten Zielgefäß (3) und zweiten Zielgefäß (5) die gleiche Menge des Analyten. Dies ermöglicht es, dass in nachfolgenden Analysen der Probenflüssigkeit im ersten Zielgefäß (3) und zweiten Zielgefäß (5) vergleichbare Ergebnisse erzielt werden können.

Bei einem nicht erfindungsgemäßen Verfahren mit V3 = V2 = 50 pL würden sich im zweiten Zielgefäß (5) 48,5 Einheiten des Analyten befinden. Im ersten Zielgefäß (3) würden sich jedoch unverändert nur 47,0 Einheiten des Analyten befinden. Somit würden nachfolgende Analysen der Probenflüssigkeit im ersten Zielgefäß (3) und zweiten Zielgefäß (5) voneinander abweichende Ergebnisse erzielen, die nicht miteinander vergleichbar sind, obwohl die erste Probenflüssigkeit im ersten Primärgefäß (1) und die zweite Probenflüssigkeit im zweiten Primärgefäß (4) beide jeweils 50,0 Einheiten des Analyten in 50,0 pL Probenflüssigkeit enthalten haben.

Bezugszeichenliste

| 1 | erstes Primärgefäß |
| 2 | Aliquotgefäß |
| 3 | erstes Zielgefäß |
| 4 | zweites Primärgefäß |
| 5 | zweites Zielgefäß |
| 11, 12, 13 | Pipettiervorgang |

**Patentansprüche**

1. Verfahren zum Transfer einer ersten Probenflüssigkeit aus einem ersten Primärgefäß (1) in ein erstes Zielgefäß (3) und einer zweiten Probenflüssigkeit aus einem zweiten Primärgefäß (4) in ein zweites Zielgefäß (5) mit Hilfe mindestens einer automatischen Pipettiervorrichtung mit einer Systemflüssigkeit in einem automatischen Analysegerät mit einem Steuergerät, aufweisend die Schritte

   a) Aufnahme eines ersten Flüssigkeitsvolumens V1 der ersten Probenflüssigkeit mit Hilfe der Pipettiervorrichtung aus dem ersten Primärgefäß (1),
   b) Abgabe des ersten Flüssigkeitsvolumens V1 der ersten Probenflüssigkeit mit Hilfe der Pipettiervorrichtung in ein Aliquotgefäß (2),
   c) Aufnahme eines zweiten Flüssigkeitsvolumens V2 der ersten Probenflüssigkeit mit Hilfe der Pipettiervorrichtung aus dem Aliquotgefäß (2),
   d) Abgabe des zweiten Flüssigkeitsvolumens V2 der ersten Probenflüssigkeit mit Hilfe der Pipettiervorrichtung in das erste Zielgefäß (3),
   e) Aufnahme eines dritten Flüssigkeitsvolumens V3 der zweiten Probenflüssigkeit mit Hilfe der Pipettiervorrichtung aus dem zweiten Primärgefäß (4),
   f) Abgabe des dritten Flüssigkeitsvolumens V3 der zweiten Probenflüssigkeit mit Hilfe der Pipettiervorrichtung in das zweite Zielgefäß (5),

   **dadurch gekennzeichnet, dass** das dritte Flüssigkeitsvolumen V3 der zweiten Probenflüssigkeit automatisch mit Hilfe des Steuergeräts gemäß des folgenden Zusammenhangs ermittelt wird:

   $$V3 = a\ V2 + b,$$

   wobei V2 das zweite Flüssigkeitsvolumen der ersten Probenflüssigkeit, a einen vorgegebenen flüssigkeitsvolumenabhängigen Korrekturfaktor und b einen vorgegebenen flüssigkeitsvolumenunabhängigen Korrekturfaktor bezeichnet und wobei der Korrekturfaktor a ungleich Eins ist.

2. Verfahren nach Anspruch 1, wobei der Korrekturfaktor a und der Korrekturfaktor b so vorgegeben sind, dass das dritte Flüssigkeitsvolumen V3 der zweiten Probenflüssigkeit kleiner als das zweite Flüssigkeitsvolumen V2 der ersten Probenflüssigkeit ist.

3. Verfahren nach einem der vorhergehenden Ansprüche, wobei der Korrekturfaktor a kleiner als Eins und größer als Null ist.

4. Verfahren nach einem der vorhergehenden Ansprüche, wobei der Korrekturfaktor b ungleich Null ist.

5. Verfahren nach einem der vorhergehenden Ansprüche, wobei der Korrekturfaktor b kleiner als Null ist.

6. Verfahren nach einem der vorhergehenden Ansprüche, wobei der Korrekturfaktor b einem an der Außenseite einer Pipettiernadel der Pipettiervorrichtung anhaftenden Volumen der ersten Probenflüssigkeit entspricht.

7. Verfahren nach einem der vorhergehenden Ansprüche, wobei der Korrekturfaktor a und/oder der Korrekturfaktor b experimentell für die Pipettiervorrichtung bestimmt wurden.

8. Verfahren nach Anspruch 7, wobei der Korrekturfaktor a und/oder der Korrekturfaktor b durch vergleichende Messreihen mit einer unterschiedlichen Anzahl von Aufnahmen und Abgaben der ersten und der zweiten Probenflüssigkeit mit Hilfe der Pipettiervorrichtung bestimmt wurde.

9. Verfahren nach einem der vorhergehenden Ansprüche, wobei die Systemflüssigkeit Wasser ist.

10. Verfahren nach einem der vorhergehenden Ansprüche, wobei die erste und/oder die zweite Probenflüssigkeit eine Probe eines Patienten, einen Kalibrator, ein Kontrollmaterial und/oder eine Kontrolllösung enthalten.

11. Verfahren nach einem der Ansprüche 1 bis 10, wobei die erste und/oder die zweite Probenflüssigkeit eine Körperflüssigkeit, bevorzugt Blut oder Urin enthält.

12. Automatisches Analysegerät umfassend mindestens eine automatische Pipettiervorrichtung mit einer Systemflüssigkeit zum Transferieren von Flüssigkeitsvolumina und mindestens ein Steuergerät, **dadurch gekennzeichnet, dass** das Steuergerät so konfiguriert ist, dass es die Durchführung eines Verfahrens zum Transfer einer ersten Probenflüssigkeit aus einem ersten Primärgefäß (1) in ein erstes Zielgefäß (3) und einer zweiten Probenflüssigkeit aus einem zweiten Primärgefäß (4) in ein zweites Zielgefäß (5) nach einem der vorhergehenden Ansprüche steuern kann.

13. Automatisches Analysegerät nach Anspruch 12, wobei die automatische Pipettiervorrichtung an einem robotisch verfahrbaren oder robotisch schwenkbaren Transferarm befestigt ist.

14. Automatisches Analysegerät nach einem der Ansprüche 12 und 13, wobei das automatische Analysegerät eine Vielzahl von Aufnahmepositionen für jeweils ein Primär- (1, 4), Aliquod-(2), und/oder Zielgefäß (3, 5), und/oder eine Vielzahl von automatischen Pipettiervorrichtung mit robotisch verfahrbaren und/oder robotisch schwenkbaren Transferarmen umfasst.

**Claims**

1. Method for transferring a first sample liquid from a first primary vessel (1) into a first target vessel (3) and a second sample liquid from a second primary vessel (4) into a second target vessel (5) with the aid of at least one automated pipetting apparatus comprising a system liquid in an automated analysis machine comprising a control machine, comprising the following steps:

    a) receiving a first liquid volume V1 of the first sample liquid with the aid of the pipetting apparatus from the first primary vessel (1),
    b) dispensing the first liquid volume V1 of the first sample liquid with the aid of the pipetting apparatus into an aliquot vessel (2),
    c) receiving a second liquid volume V2 of the first sample liquid with the aid of the pipetting apparatus from the aliquot vessel (2),
    d) dispensing the second liquid volume V2 of the first sample liquid with the aid of the pipetting apparatus into the first target vessel (3),
    e) receiving a third liquid volume V3 of the second sample liquid with the aid of the pipetting apparatus from the second primary vessel (4),
    f) dispensing the third liquid volume V3 of the second sample liquid with the aid of the pipetting apparatus into the second target vessel (5),

**characterized in that** the third liquid volume V3 of the second sample liquid is automatically ascertained with the aid of the control machine in accordance with the following relationship:

$$V3 = a\ V2 + b,$$

where V2 denotes the second liquid volume of the first sample liquid, a denotes a predetermined liquid-volume-dependent correction factor and b denotes a predetermined liquid-volume-independent correction factor and where the correction factor a is unequal to one.

2. Method according to Claim 1, wherein the correction factor a and the correction factor b are predetermined in such a way that the third liquid volume V3 of the second sample liquid is less than the second liquid volume V2 of the first sample liquid.

**3.** Method according to one of the preceding claims, wherein the correction factor a is less than one and greater than zero.

**4.** Method according to one of the preceding claims, wherein the correction factor b is unequal to zero.

**5.** Method according to one of the preceding claims, wherein the correction factor b is less than zero.

**6.** Method according to one of the preceding claims, wherein the correction factor b corresponds to a volume of the first sample liquid adhering to the outside of a pipetting needle of the pipetting apparatus.

**7.** Method according to one of the preceding claims, wherein the correction factor a and/or the correction factor b were determined experimentally for the pipetting apparatus.

**8.** Method according to Claim 7, wherein the correction factor a and/or the correction factor b were determined by comparative measurement series with a different number of instances of receiving and dispensing the first sample liquid and the second sample liquid with the aid of the pipetting apparatus.

**9.** Method according to one of the preceding claims, wherein the system liquid is water.

**10.** Method according to one of the preceding claims, wherein the first sample liquid and/or the second sample liquid contain a sample of a patient, a calibrator, a control material and/or a control solution.

**11.** Method according to one of Claims 1 to 10, wherein the first sample liquid and/or the second sample liquid contains a bodily fluid, preferably blood or urine.

**12.** Automated analysis machine comprising at least one automated pipetting apparatus comprising a system liquid for transferring liquid volumes and at least one control machine, **characterized in that** the control machine is configured in such a way that it may control the execution of a method for transferring a first sample liquid from a first primary vessel (1) into a first target vessel (3) and a second sample liquid from a second primary vessel (4) into a second target vessel (5) according to one of the preceding claims.

**13.** Automated analysis machine according to Claim 12, wherein the automated pipetting apparatus is fastened to a robotically displaceable or robotically swivelable transfer arm.

**14.** Automated analysis machine according to either of Claims 12 and 13, wherein the automated analysis machine comprises a multiplicity of receiving positions for respectively one primary vessel (1, 4), aliquot vessel (2) and/or target vessel (3, 5), and/or a multiplicity of automated pipetting apparatuses with robotically displaceable and/or robotically swivelable transfer arms.

**Revendications**

**1.** Procédé de transfert d'un premier liquide échantillon d'un premier vase (1) primaire à un premier vase (3) cible et d'un deuxième liquide échantillon d'un deuxième vase (4) primaire à un deuxième vase (5) cible à l'aide d'au moins un dispositif de pipetage automatique ayant un liquide de système dans un appareil d'analyse automatique ayant un appareil de commande, comportant les stades

a) réception d'un premier volume V1 de liquide du premier liquide échantillon à l'aide du dispositif de pipetage à partir du premier vase (1) primaire,
b) transvasement du premier volume V1 de liquide du premier liquide échantillon à l'aide du dispositif de pipetage dans un vase (2) d'aliquote,
c) réception d'un deuxième volume V2 de liquide du premier liquide échantillon à l'aide du dispositif de pipetage à partir du vase (2) d'aliquote,
d) transvasement du deuxième volume V2 de liquide du premier liquide échantillon à l'aide du dispositif de pipetage dans le premier vase (3) cible,
e) réception d'un troisième volume V3 de liquide du deuxième liquide échantillon à l'aide du dispositif de pipetage à partir du deuxième vase (4) primaire,
f) transvasement du troisième volume V3 de liquide du deuxième liquide échantillon à l'aide du dispositif de pipetage dans le deuxième vase (5) cible,

**caractérisé en ce que** l'on détermine le troisième volume V3 de liquide du deuxième liquide échantillon automatiquement à l'aide de l'appareil de commande selon la relation suivante :

$$V3 = a\ V2 + b,$$

dans laquelle V2 désigne le deuxième volume de liquide du premier liquide échantillon, a un facteur de correction donné à l'avance dépendant du volume du liquide et b un facteur de correction donné à l'avance indépendant du volume du liquide, le facteur a de correction étant différent d'un.

**2.** Procédé suivant la revendication 1, dans lequel le facteur a de correction et le facteur b de correction sont donnés à l'avance, de manière à ce que le troisième volume V3 de liquide du deuxième liquide échantillon soit plus petit que le deuxième volume V2 de liquide du premier liquide échantillon.

**3.** Procédé suivant l'une des revendications précédentes, dans lequel le facteur a de correction est plus petit que un et plus grande que zéro.

**4.** Procédé suivant l'une des revendications précédentes, dans lequel le facteur b de correction est différent de zéro.

**5.** Procédé suivant l'une des revendications précédentes, dans lequel le facteur b de correction est plus petit que zéro.

**6.** Procédé suivant l'une des revendications précédentes, dans lequel le facteur b de correction correspond à un volume du premier liquide échantillon adhérant à la face extérieure d'une aiguille de pipetage du dispositif de pipetage.

**7.** Procédé suivant l'une des revendications précédentes, dans lequel on a déterminé le facteur a de correction et/ou le facteur b de correction expérimentalement pour le dispositif de pipetage.

**8.** Procédé suivant la revendication 7, dans lequel on a déterminé le facteur a de correction et/ou le facteur b de correction par des séries de mesure de comparaison avec un nombre différent de réceptions et de transvasements du premier et du deuxième liquide échantillon à l'aide du dispositif de pipetage.

**9.** Procédé suivant l'une des revendications précédentes, dans lequel le liquide de système est l'eau.

**10.** Procédé suivant l'une des revendications précédentes, dans lequel le premier et/ou le deuxième liquide échantillon contiennent un échantillon d'un patient, un étalonneur, une matière témoin et/ou une solution témoin.

**11.** Procédé suivant l'une des revendications 1 à 10, dans lequel le premier et/ou le deuxième liquide échantillon contiennent un liquide corporel, de préférence du sang ou de l'urine.

**12.** Appareil d'analyse automatique, comprenant au moins un dispositif de pipetage automatique ayant un liquide de système pour transvaser des volumes de liquide et au moins un appareil de commande, **caractérisé en ce que** l'appareil de commande est configuré de manière à pouvoir commander d'effectuer un procédé de transvasement d'un premier liquide échantillon d'un premier vase (1) primaire dans un premier vase (3) cible et d'un deuxième liquide échantillon d'un deuxième vase (4) primaire dans un deuxième vase (5) cible suivant l'une des revendications précédentes.

**13.** Appareil d'analyse automatique suivant la revendication 12, dans lequel le dispositif de pipetage automatique est fixé à un bras de transvasement pouvant être déplacé par robot ou pouvant pivoter par robot.

**14.** Appareil d'analyse automatique suivant l'une des revendications 12 et 13, dans lequel l'appareil d'analyse automatique comprend une pluralité de positions de réception de, respectivement, un vase (1, 4) primaire, un vase (2) d'aliquote, et/ou un vase (3, 5) cible, et/ou une pluralité de dispositifs de pipetage automatique à bras de transvasement pouvant être déplacés par robot et/ou pouvant pivoter par robot.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015126839 A1
- FR 2867397 A1
- US 2007026534 A1
- US 2014193918 A1
- US 2012196374 A1

**In der Beschreibung aufgeführte Nicht-Patentliteratur**

- Development of_Standard Test Procedures for Quantifying Carry Over from Fixed Pipetting Tips in Liquid-Handling Systems. **WEIBEL et al.** Journal of the Association for Laboratory Automation. Elsevier, vol. 15